# EUROPÄISCHE PATENTSCHRIFT

(11) **EP 3 756 959 B1**
(45) Veröffentlichungstag und Bekanntmachung des Hinweises auf die Patenterteilung: **15.12.2021**
(21) Anmeldenummer: 20182324.2
(22) Anmeldetag: 25.06.2020
(51) Int. Cl.: B60S 3/04, B60S 3/06

(54) **HÖHENVERSTELLBARE SCHALTFAHNE**
HEIGHT-ADJUSTABLE SWITCHING CAM
PLAQUE DE COMMUTATION RÉGLABLE EN HAUTEUR

(30) Priorität: 27.06.2019 DE 102019117389
(43) Veröffentlichungstag der Anmeldung: 30.12.2020
(73) Patentinhaber: WashTec Holding GmbH, 86153 Augsburg (DE)
(72) Erfinder: ARNDT, Sven Johannes, 86153 Augsburg (DE); STEININGER, Franz, 86424 Dinkelscherben (DE)
(74) Vertreter: Winter, Brandl - Partnerschaft mbB

(56) Entgegenhaltungen:
- DE-U1-202014 103 931
- JP-B2- 4 259 425
- US-A1- 2011 155 188

## Beschreibung

### Technisches Gebiet

Die vorliegende Offenbarung betrifft eine Schaltvorrichtung, insbesondere eine Schaltfahne zur Endlagenerkennung in einer Fahrzeugbehandlungsanlage, die dazu vorbereitet ist, mit ihrer Unterseite an einem Hallenboden montiert zu werden.

Die JP 4 259425 B2 offenbart eine Schaltvorrichtung zur Endlagenerkennung in einer Fahrzeugbehandlungsanlage.

Nach aktuellen Normen und Richtlinien müssen in verschiedenen Anlagen, wie beispielsweise Fahrzeugwaschanlagen, Quetschgefahren vermieden werden. Zu diesem Zweck ist es für bodenmontierte Schaltstücke, die etwa zur Endlagenerkennung fahrfahrbarer Waschportale eingesetzt werden, nötig, deren in Fahrtrichtung der Anlage ausgerichteten Seitenflanke so auszulegen, dass diese in einem Winkel kleiner oder gleich 30° relativ zum Hallenboden angestellt sind. Für derart gewählte Steigungswinkel ist gewährleistet, dass Schuhe von Personen im Gefahrbereich nicht eingequetscht sondern nach oben auf das Schaltelement hinaufgeschoben werden.

Bei den im Stand der Technik bekannten Schaltelementen mit angestellten Seitenflanken tritt häufig das Problem auf, dass diese in ihrer Höhe festgelegt sind. Es ist bei bekannten Lösungen zudem schwierig, Höhenunterschiede bzw. Unebenheiten im Hallenboden auszugleichen. In der Praxis führt dies oftmals dazu, dass Monteure versuchen mit improvisierten Unterlegteilen die Schaltfahnen zu unterbauen. Dadurch kann ein unzulässiger Absatz oder im Extremfall eine schwebende Keilform entstehen, wodurch sich die Quetschgefahr unzulässig erhöht.

Die vorliegende Erfindung macht es sich deshalb zur Aufgabe, eine Schaltvorrichtung bereitzustellen, die in ihrer Höhe einstellbar ist, Höhenunterschiede des Hallenbodens ausgleichen kann und gleichzeitig Quetschgefahren zu vermeidet.

Zu diesem Zweck ist eine Schaltvorrichtung vorgesehen, die dazu vorbereitet ist, mit ihrer Unterseite an einem Hallenboden montiert zu werden. Die Schaltvorrichtung hat zumindest ein keilartiges Sockelelement und einen auf das Sockelelement (Unterteil) aufsetzbaren Grundkörper (Oberteil). Der Grundkörper ist zur Bereitstellung einer Höheneinstellbarkeit mittels einer Verstellmechanik in verschiedenen Höhenpositionen auf dem Sockelelement lagerbar bzw. kann in verschiedenen Höhenpositionen auf dem Lagerelement montiert werden. Das Sockelelement hat eine Sockel-Unterseite bzw. Grundseite und ist dazu ausgebildet mit dieser an einem Hallenboden montiert zu werden. Zudem hat das Sockelelement eine Sockel-Seitenflanke, die einen spitzen Winkel, insbesondere einen Winkel kleiner oder gleich 30°, mit der Sockel-Unterseite einschließt, sodass das Sockelelement ein keilfömiges bzw. keilähnliches Profil erhält. Insbesondere ist das Sockelelement so ausgebildet, dass Sockel-Unterseite und Sockel-Seitenflanke spitz aufeinander zulaufen, sodass, wenn es mit der Unterseite auf einen Hallenbodenmontiert ist, keine nennenswerte Stufe zwischen Hallenboden und der schrägen Seitenflanke gebildet wird. Der Grundkörper wird so auf das Sockelelement aufgesetzt, dass eine Grundkörper-Seitenflanke und die Sockel-Seitenflanke gemeinsam eine (im Profil kontinuierliche) Seitenflanke der Schaltvorrichtung bilden. Das Sockelelement, der Grundkörper und die Verstellmechanik der Schaltvorrichtung sind derart ausgebildet und aufeinander abgestimmt, dass die Sockel-Seitenflanke und die Grundkörper-Seitenflanke unabhängig von der eingestellten Höhenposition des Grundkörpers relativ zum Sockelelement eine parallele Ausrichtung relativ zueinander beibehalten. In anderen Worten ist die erfindungsgemäße Schaltvorrichtung mehrteilig ausgeführt, um eine Höhenverstellbarkeit bereitzustellen. Die verschiedenen Teile (Oberteil/Unterteil) lassen sich dazu in verschiedenen Relativpositionen montieren, wobei eine Verstellmechanik gewährleistet, dass eine durch beide Teile gemeinsam gebildete Seitenflanke der Schaltvorrichtung in jeder eingestellten Relativpositionen einen vorbestimmten Winkel relativ zum Hallenboden nicht überschreitet.

Die erfindungsgemäße Schaltvorrichtung erlaubt eine Höheneinstellung, bei der unabhängig von der eingestellten Höhe in Bewegungsrichtung einer verfahrbaren Anlage (wie beispielsweise einem Waschportal) die Quetschgefahr eliminiert ist. Die vorbestimmte schräge, insbesondere kleiner gleich 30°, ist unabhängig von der Höheneinstellung immer bis zum Boden gegeben.

Gemäß einer bevorzugten Ausführungsform kann die Verstellmechanik ein Rast- bzw. Stufensystem aufweisen, das eine stufenweise Einstellbarkeit der Höhenposition des Grundkörpers relativ zum Sockelelement erlaubt. In anderen Worten kann das Sockelelement eine Anzahl von in dieselbe Richtung wie die Sockel-Seitenflanke ansteigenden Stufenabschnitten aufweisen, sodass der Grundkörper in verschiedenen Höhen auf den verschiedenen Stufen abgestützt werden kann. Bevorzugt kann das Rastsystem mittels komplementärer Verzahnungsabschnitte am Sockelelement und am Grundkörper ausgebildet sein. In anderen Worten können verschiedene Stufen in der Geometrie des Grundkörpers und/oder des Sockelelements ausgebildet sein, die eine Montage des Grundkörpers auf dem Sockelelement in verschiedenen Höhenpositionen erlauben. Eine solche Verzahnung/Verstufung vereinfacht die Montage, da Grundköper auf der gewünschten Stufe des Sockels gelagert werden kann und deshalb während des Fixierens nicht zusätzlich gehalten werden muss. Besonders bevorzugt können die Verzahnungsabschnitte des Rastsystems eine relativ zur Sockel-Unterseite schräg angestellte Verzahnung aufweisen bzw. können die Stufen schräg angestellt ausgebildet sein. Auf diese Weise zentriert sich der Grundkörper unter der Beaufschlagung durch seine eigene Gewichtskraft selbstständig in der Verzahnung.

Gemäß einem bevorzugten Ausführungsbeispiel kann der Grundkörper im Bereich der Grundkörper-Seitenflanke eine Führungsfläche aufweisen bzw. können Grundkörper und Sockelelemente komplementäre Führungsschrägen aufweisen. Die Führungsfläche kann bevorzugt parallel zu Flanken des Sockelelements und des Grundkörpers ausgebildet sein. Führungsflächen, die parallel zu den Seitenflanken verlaufen sorgen dafür, dass bei einem Anheben des Grundkörpers das Sockelelement eine zwangsgeführte Parallelverschiebung in Erstreckungsrichtung der Seitenflanken durchführt. Bevorzugt kann die Führungsfläche des Grundkörpers eine Innenfläche der Sockel-Seitenflanke untergreifen bzw. die Sockel-Seitenflanke innenseitig auf der Führungsfläche aufliegen. Hierzu kann das Sockelelement bevorzugt hohl ausgeführt sein. Eine solche Führungsfläche (Führungsflächenpaarung) erlaubt eine schnelle Montage der erfindungsgemäßen Schaltvorrichtung, da bei einfachem Anheben des Grundkörpers auf die gewünschte Höhe das Sockelelement von selbst (durch die Führungsfläche zwangsgeführt) nach außen rutscht, wodurch die parallele Ausrichtung der Sockel-Seitenflanke und der Grundkörper-Seitenflanke erhalten bleibt.

Gemäß einem weiter bevorzugten Aspekt der Erfindung kann das Sockelelement zusätzlich in seiner Beweglichkeit in Breitenrichtung der Schaltvorrichtung (d.h. quer zur Längserstreckungsrichtung der Sockel-Seitenflanke) relativ zum Grundkörper begrenzt sein. Hierzu kann beispielsweise eine parallel zur Längserstreckungsrichtung der Sockel-Seitenflanke verlaufende Feder-Nut-Verbindung, Kulissenführung oder dergleichen zwischen dem Grundkörper und dem Sockelelement vorgesehen sein. Besonders bevorzugt kann die Sockel-Seitenflanke Feder-Nut-artig in einer zentralen Aussparung in der Grundkörper-Seitenflanke laufend angeordnet sein. D. h. die Seitenflanke des Grundkörpers kann in zwei Seitenflankenabschnitte unterteilt sein und die Seitenflanke des Sockelelements kann zwischen diesen Seitenflankenabschnitten linear verschiebbar aufgenommen sein. Bevorzugt kann in diesem Fall die Führungsfläche ebenfalls zwischen den beiden Seitenflankenabschnitten des Grundkörpers und gegenüber diesen eingerückt angeordnet sein. Alternativ kann sich die Sockel-Seitenflanke über die gesamte Breitenrichtung der Schaltvorrichtung erstrecken und mit einem sich nach unten erstreckenden Abschnitt in einer Nut in der Grundkörper-Seitenflanke geführt sein. Durch die vorstehenden Merkmale lässt sich auf einfache Weise eine definierte geführte Bewegung des Sockelelements bei einem Anheben des Grundkörpers erzielen.

Gemäß einer bevorzugten Ausführungsform können die Sockel-Seitenflanke und die (benachbarte) Grundkörper-Seitenflanke unabhängig von der eingestellten Höhenposition in einer gemeinsamen Ebene liegen bzw. bündig abschließen, um gemeinsam eine im Wesentlichen plane Seitenflanke der Schaltvorrichtung ausbilden. Dies minimiert durch die Schaltvorrichtung entstehende Quetschgefahren zusätzlich.

Gemäß einem weiter bevorzugten Aspekt der Erfindung kann der Grundkörper an seiner Oberseite zumindest eine Durchgangsbohrung aufweisen und das Sockelelement kann zumindest ein korrespondierendes (vertikales) Langloch aufweisen, sodass die Schaltvorrichtung mithilfe eines Befestigungsmittels in verschiedenen Höhenpositionen des Grundkörpers am Boden fixierbar ist. In anderen Worten kann ein Befestigungsmittel, wie zum Beispiel eine Schraube, Niete oder dergleichen, vertikal den Grundkörper und das Sockelelement durchdringend gesetzt werden, um die Oberseite des Grundkörpers mit dem Hallenboden zu Verspannen. Hierdurch wird in einem einzigen Montageschritt die Schaltvorrichtung am Boden fixiert und gleichzeitig ein Kraftschluss (zusätzlich zu einem gegebenenfalls vorhandenen Formschluss durch die Verzahnung/Verstufung) zwischen Grundkörper und Sockelelement erzeugt. Das Langloch im Sockelabschnitt erlaubt eine Penetration des Befestigungsmittels durch den Sockelabschnitt unabhängig von der eingestellten Höhenposition des Grundkörpers, d. h. unabhängig davon wie weit das Sockelelement relativ zur Grundkörpermitte nach außen angeordnet/positioniert ist.

Gemäß einem bevorzugten Aspekt kann das Langloch so ausgebildet sein, dass in einer minimalen Höhenposition des Grundkörpers und/oder in einer maximalen Position des Grundkörpers ein Rand des Langlochs in einer Draufsicht bündig mit einem Rand der Durchgangsbohrung abschließt. Durch eine solche Ausgestaltung bildet bei gesetztem Befestigungsmittel das Befestigungsmittel per se einen Anschlag für die Relativverschiebung zwischen Sockelelement und Grundkörper aus.

Gemäß einem weiter bevorzugten Ausführungsbeispiel kann der Grundkörper an zwei gegenüberliegenden Seiten Grundkörper-Seitenflanken mit dem vorbestimmten Steigungswinkel haben, an denen jeweils ein Sockelelement gemäß einem der vorstehend beschriebenen Aspekte angeordnet ist. Besonders bevorzugt kann die Schaltvorrichtung einen Grundkörper und zwei im Wesentlichen keilförmige Sockelelemente aufweisen, die symmetrisch ausgebildet sind, sodass die Schaltvorrichtung zu zwei gegenüberliegenden Seiten mit ihren Seitenflanken zum Boden hin keilförmig abgeflacht.

Gemäß einem weiter bevorzugten Aspekt kann der Grundkörper in einer Seitenansicht betrachtet einen Umriss in Form eines gleichschenkligen Trapezes haben. Der Grundkörper kann also eine bodenparallele Oberseite und eine bodenparallele Unterseite aufweisen sowie zwei gleich lange Schenkel haben, die den vorbestimmten spitzen Winkel der Keilform der Sockelelemente mit der bodenparallelen Unterseite einschließen.

Ein weiterer bevorzugter gegebenenfalls unabhängig zu beanspruchen Aspekt der Erfindung betrifft eine Fahrzeugbehandlungsanlage, insbesondere eine Portalwaschanlage, mit einer Schaltvorrichtung gemäß einem der vorgenannten Aspekte. In einer solchen Anlage kann der Flankensteigungswinkel der Sockelelemente/des Sockelelements bevorzugt kleiner oder gleich 30° sein, um genormte Anforderungen zu erfüllen.

### Kurzbeschreibung der Figuren

Die vorliegende Erfindung wird nachfolgend anhand beispielhafter Ausführungsbeispiele erläutert, die zur besseren Veranschaulichung in den Figuren dargestellt sind.
Fig. 1 ist eine Darstellung zur Veranschaulichung einer Fahrzeugbehandlungsanlage mit einer Schaltvorrichtung gemäß der vorliegenden Offenbarung;
Fig. 2 ist eine perspektivische Darstellung zur Veranschaulichung einer Schaltvorrichtung gemäß einer bevorzugten Ausführungsform in einer untersten Höheneinstellung;
Fig. 3 ist eine perspektivische Darstellung der Schaltvorrichtung gemäß der bevorzugten Ausführungsform in einer obersten Höheneinstellung;
Fig. 4 ist eine seitliche Schnittdarstellung der Schaltvorrichtung gemäß der bevorzugten Ausführungsform; und
Fig. 5 ist eine Unteransicht der Schaltvorrichtung gemäß der bevorzugten Ausführungsform.

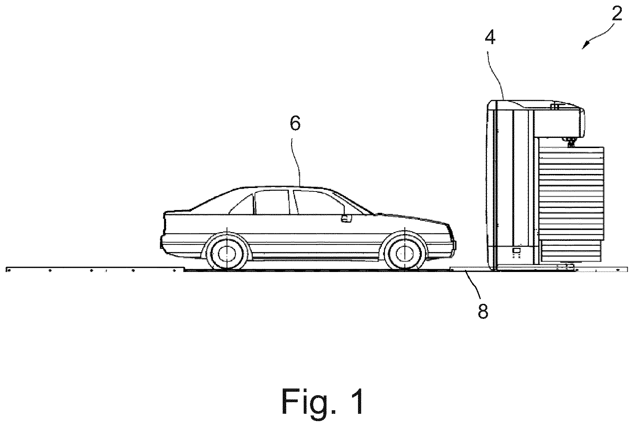

Fig. 1 zeigt als beispielhaftes Anwendungsgebiet für eine Schaltvorrichtung gemäß der vorliegenden Erfindung eine Fahrzeugbehandlungsanlage genauer gesagt eine Portalwaschanlage 2 mit einem linear beweglichen Waschportal 4, welches relativ zu einem abgestellten Fahrzeug 6 auf einem Schienensystem 8 verfahrbar ist. In solchen Waschanlagen 2 kommen zur Endlagenerkennung des Fahrwegs des Portals 4 bodenmontierte Schaltvorrichtungen, auch Schaltfahnen oder Schaltstücke genannt, zum Einsatz. Diese werden in Endpositionen des Fahrwegs des Waschportals 4 am Boden der Waschhalle fixiert und stellen somit raumfeste, von der Sensorik der Waschanlage 2 erfassbare Objekte dar, anhand derer das Waschportal 4 das Ende seines Fahrwegs erkennt.

Nach aktuellen Normen und Richtlinien müssen Quetschgefahren in Anlagen der vorstehend beschriebenen Art vermieden werden. Dazu ist es für solche bodenmontierten Schaltvorrichtungen bekannt, dass ein Steigungswinkel der Seitenflanke von kleiner oder gleich 30° relativ zum Hallenboden die Gefahr eines Einquetschens von Schuhen, die zwischen Schaltvorrichtung 1 und Waschportal 4 gelangen, minimiert, da der Schuh dann durch die Bewegung des Waschportals 4 auf die Schaltvorrichtung hinaufgeschoben wird.

Bislang waren zu diesem Zweck einstückige Schaltvorrichtungen mit flach abfallenden Seitenflanken bekannt. Diese haben aber in der Praxis den Nachteil, dass man es oftmals mit Unebenheiten im Waschhallenboden zu tun hat. Da die Schaltvorrichtungen horizontal und in einer bestimmten Höhe montiert werden müssen, um optimal vom Waschportal 4 erfasst werden zu können, kam es aus diesem Grund in der Vergangenheit oftmals dazu, dass Monteure die Schaltvorrichtungen 1 mit improvisierten Unterlegteilen unterbauten. Hierdurch entsteht ein Absatz oder schlimmstenfalls sogar eine schwebende Keilform, die das Verletzungsrisiko eines zwischen Schaltvorrichtung 1 und Waschportal 4 gefangenen Fußes schlimmstenfalls erhöht anstatt es zu beseitigen.

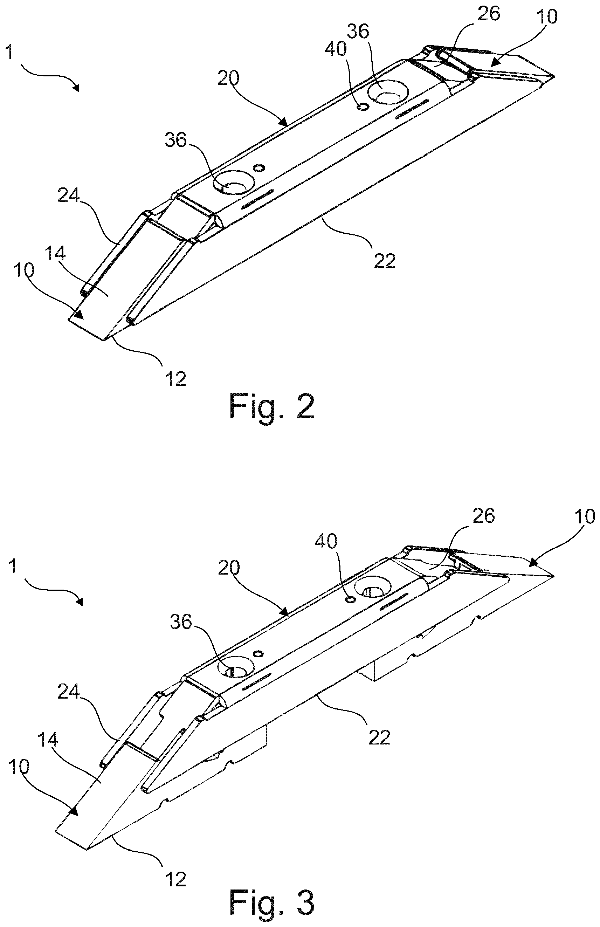

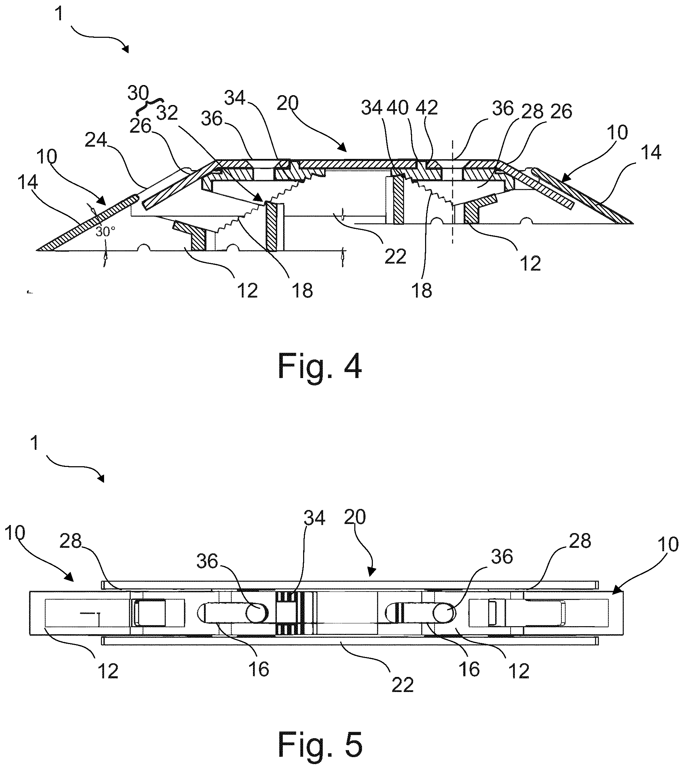

Die in Fig. 2 perspektivisch dargestellte Schaltvorrichtung 1 gemäß einer bevorzugten Ausführungsform der vorliegenden Erfindung schafft Abhilfe für dieses Problem, indem sie einen nachstehend beschriebenen, in der Schaltvorrichtung 1 integrierten Höhenverstellbarkeitsmechanismus bereitstellt. Zu diesem Zweck ist die erfindungsgemäße Schaltvorrichtung 1 nicht, wie im Stand der Technik bekannt, als einstückiger, starrer Körper sondern mehrgliedrig ausgeführt. Grundlegend weist die Schaltvorrichtung 1 zwei Sockelelemente 10 auf, die einen Grundkörper 20 in verschiedenen einstellbaren Höhenpositionen tragen können. In der Fig. 2 ist eine unterste Höheneinstellung der Schaltvorrichtung 1 dargestellt, in der eine Sockel-Unterseite 12 und eine Grundkörper-Unterseite 22 im beinahe bündig liegen. In dieser untersten Höheneinstellung entspricht die Höhe der gesamten Schaltvorrichtung 1 in etwa der Höhe des Grundkörpers 20. Die Sockelelemente 10 sind im dargestellten Ausführungsbeispiel in ihrer Grundform bzw. Grundgeometrie keilartig und die Sockel-Seitenflanke 14 jedes der beiden Sockelelements 10 ist in einem Winkel von hier 30° relativ zur Sockel-Unterseite 12 angestellt. Die Sockel-Seitenflanke 14 steigt also im montierten Zustand im Wesentlichen übergangslos und in einem quetschungsunkritischen Winkel vom Hallenboden aus an. Der Grundkörper 20 bildet in Längsrichtung gesehen an seinen gegenüberliegenden Endbereichen Grundkörper-Seitenflanken 24 aus, die ebenfalls in einem 30° Winkel relativ zur Sockel-Unterseite 12 und zur Grundkörper-Unterseite 22 angestellt sind. Somit erstrecken sich die Grundkörper-Seitenflanken 24 parallel zu den Sockel- Seitenflanken 14 und bilden zusammen eine kontinuierliche Gesamt-Seitenflanke der Schaltvorrichtung 1 aus. In der bevorzugten Ausführungsform ist der Grundkörper 20 aus Metall gefertigt während die beiden Sockelelemente 10 aus Kunststoff gefertigt sind. Wie am besten in der Seitenansicht der Fig. 4 zu erkennen ist, hat der Grundkörper 20 gemäß der bevorzugten Ausführungsform im Wesentlichen die Profilform eines gleichschenkligen Trapezes.

Zur Befestigung am Hallenboden weist die dargestellte Schaltvorrichtung 1 gemäß dem bevorzugten Ausführungsbeispiel 2 Durchgangsbohrungen 36 auf, die dazu vorbereitet sind, dass man durch diese hindurch Befestigungsmittel, wie zum Beispiel Schrauben, setzt.

Fig. 3 zeigt die Schaltvorrichtung 1 aus Fig. 2 in einer obersten Höheneinstellung. In dieser sind die beiden Sockelelemente 10 von der Grundkörpermitte ausgesehen maximal in Längsrichtung ausgefahren. Hierdurch liegt der Grundkörper 20 auf einem höchsten Punkt eines Verstellmechanismus 30 des jeweiligen Sockelelements 10 auf, wie im Folgenden genauer erläutert wird.

Besagter Verstellmechanismus 30 ist am besten in der Schnittdarstellung der Fig. 4 zu erkennen. Im dargestellten bevorzugten Ausführungsbeispiel für eine Schaltvorrichtung 1 ist der Verstellmechanismus 30 als Rastsystem 32 implementiert. Genauer gesagt weist ein von der Spitze der Keilform des Sockelelements 10 abgewandter Endbereich eine von der Sockelelement Mitte aus ansteigende, treppenähnliche Verzahnung 18 auf. Der Grundkörper 20 weist eine komplementäre Verzahnung 34 an seiner unteren Innenseite auf. Die Verzahnungen sind schräg ausgeführt, d. h. die Verzahnungen verlaufen nicht in dem Sinne treppenartig, dass sie vertikale und horizontale Abschnitte aufweisen, sondern die Flanken der Verzahnung sind gegenüber der Horizontalen bzw. der Vertikalen jeweils leicht angestellt. Dies hat gegenüber einer rein horizontalen bzw. vertikalen Verzahnung den Vorteil dass sich der Mechanismus für jede eingestellte Stufe selbstständig zentriert. Wie ebenfalls in der Fig. 4 gut zu erkennen ist, können die beiden Sockelelemente 10 unabhängig voneinander verstellt werden. Die komplementären Verzahnungen 18, 34 sorgen zudem für eine definierte Ausrichtung des Sockelelements 10 relativ zum Grundkörper 20, in der die Sockel-Seitenflanken 14 unabhängig von der gewählten Höheneinstellung parallel zu den Grundkörper-Seitenflanken 24 ausgerichtet sind. Die geforderten 30° Anstellwinkel relativ zum Boden bleiben folglich in jeder Montageposition über die gesamte Seitenflankenlänge erhalten und die geforderte Sicherheit kann zu 100 % gewährleistet werden. Über eine asymmetrische Einstellung der beiden Sockelelemente 10 lässt sich, wie in Fig. 4 dargestellt, zudem ein etwaiges Gefälle oder eine Stufe im Hallenboden ausgleichen, wobei beide Seitenflanken dennoch den geforderten Steigungswinkel von 30° erfüllen.

Ein weiteres Merkmal des in Fig. 4 dargestellten Verstellmechanismus 30 ist die Führungsfläche 26 am Grundkörper 20. Diese ist gegenüber der Grundkörper-Seitenflanke 24 etwas zum Grundkörperinneren hin eingerückt. Die Sockel-Seitenflanke 14 ist, wie in den perspektivischen Darstellungen der Fig. 2 und Fig. 3 gut zu erkennen ist, derart angeordnet, dass sie in einer länglichen Aussparungen bzw. Nut 26 innerhalb der Grundkörper-Seitenflanke 24 in Grundkörperlängsrichtung relativverschiebbar ist. Man könnte auch sagen der Grundkörper 20 gabelt sich im Bereich seiner abfallenden Seitenflanken 24 in zwei beabstandete Teilflächen auf, die durch die dazwischen angeordnete Fläche der Sockel-Seitenflanke 14 zu einer Gesamt-Seitenflanke vervollständigt werden. Alternativ kann anstelle der Nut 26 im Grundkörper 20 das Sockelelement 10 nach unten gezogen und mittels diesem nach unten gezogenen Abschnitt im Grundkörper 20 geführt sein. Das Sockelelement 10 ist in seinem Inneren hohl und weist an seiner Oberseite eine Aussparung auf, in welche die Führungsfläche 26 des Grundkörpers 20 eintaucht, sodass die Führungsfläche 26 die Sockel-Seitenflanke 14 vom Sockelinneren her untergreift. Die Führungsfläche 26 ist in dieser Konstellation derart angeordnet, dass in einem Zustand, in dem der Grundkörper 20 auf den Sockelelementen 10 aufliegt, ein geringer Spalt bzw. ein gewisses Spiel zwischen der Innenseite der Sockel-Seitenflanke 14 und der Führungsfläche 26 besteht, wie auf der rechten Seite der Schaltvorrichtung 1 in der Fig. 4 gut zu erkennen ist. Hebt man nun von der an der rechten Seite der Fig. 4 dargestellten Anordnung aus den Grundkörper 20 senkrecht nach oben an, so wird die komplementäre Verzahnung 18, 34 außer Eingriff gebracht und die Führungsfläche 26 des Grundkörpers 20 gleitet an der Innenseite der Sockel-Seitenflanke 14 ab, sodass das Sockelelement 10 zwangsgeführt um genau die Distanz in Horizontalrichtung von der Grundkörpermitte weggeschoben wird, bei der ein kontinuierliches Profil der Gesamt-Seitenflanke gewährleistet ist. Zu diesem Zweck verläuft die Führungsfläche 26 parallel zu den Seitenflanken 14, 24. Je höher die Schaltvorrichtung 1 also eingestellt wird, desto weiter rutschen die beiden keilförmigen Sockelelemente 10 in der Seitenansicht nach außen.

Durch die vorstehend beschriebene konstruktive Gestaltung des Verstellmechanismus 30 gemäß dem bevorzugten Ausführungsbeispiel ist eine einfache und schnelle Montage mittels zweier Befestigungsmittel, bevorzugt Schrauben, möglich. Nach dem Setzen der Schrauben am Hallenboden und durch die Durchgangsbohrung 36 der Schaltvorrichtung 1 hindurch lässt sich die Montagehöhe sehr einfach durch Anheben des Grundkörpers 20 einstellen, da die Sockelelemente 10 durch die Führungsflächen 26 von sich aus nach außen geschoben werden. Auf der gewünschten Höhe/Stufe kann der Grundkörper 20 auf den Sockelelementen 10 gelagert werden. Hierbei zentriert sich das System durch die schräge Verzahnung selbstständig. Anschließend können die Schrauben festgezogen werden, wodurch der Grundkörper 20 gegen den Hallenboden verspannt und die Verzahnung 34 an der Unterseite des Grundkörpers 20 in die Verzahnung 18 der Sockelelemente 10 hineingezogen wird, um das System zu fixieren. Im Sockelelemente 10 ist korrespondierend zur Durchgangsbohrung 36 im Grundkörper 20 ein am besten in der Unteransicht der Fig. 5 zu erkennender langlochförmiger Ausschnitt 16 vorgesehen, um nach dem Setzen der Schrauben beim Anheben des Grundkörpers 20 die geführte Relativbewegung des Sockelelements 10 zu ermöglichen. Egal auf welches Niveau die Schaltvorrichtung 1 eingestellt wird, bleibt also der Abstand der Befestigungspunkte (am Boden) derselbe.

Wie am besten in der Fig. 4 zu erkennen ist, ist die Verzahnung 18, 34 derart ausgeführt, dass bei aufliegendem Grundkörper 20 durch horizontales Verschieben eines Sockelelements 10 zur Grundkörpermitte hin, ein Durchrutschen der Verzahnung 18, 34 möglich ist. Eine versehentlich zu hoch gewählte Einstellung bei bereits gesetzter Schraube kann so auf einfache Weise korrigiert werden. Andererseits ist die Steigung der Verzahnungswinkel so gewählt, dass beim Aufbringen eines Drucks von oben auf den Grundkörper kein Durchrutschen möglich ist sondern sich das System selbst formschlüssig zentriert.

Die grundkörperseitige Verzahnung 34 ist im bevorzugten Ausführungsbeispiel nicht integral mit dem Grundkörper 20 gefertigt sondern über separate in die Unterseite des Grundkörpers 20 eingefügte Verzahnungskörper 38 realisiert. Dies bietet fertigungstechnische Vorteile und erlaubt zudem einen Austausch der Verzahnung 34, ohne dass hierzu der gesamte Grundkörper 20 ausgetauscht werden muss. Im bevorzugten Ausführungsbeispiel weist der Grundkörper 20 zwei Verzahnungskörper 38 auf. Die Verzahnungskörper 38 sind jeweils über integrale Zapfen 40 werkzeuglos befestigbar in entsprechenden Passungslöchern 42 des Grundkörpers 20 aufgenommen.

In der Unteransicht der Schaltvorrichtung 1 der Figur 5 ist besonders gut das bereits erläuterte Langloch 16 in den Sockelelementen 10 zu erkennen. In Fig. 5 ist gut zu sehen, wie in der maximal ausgefahrenen Stellung bzw. höchsten Montageposition (linkes Sockelelement 10 in der Darstellung) der rechte Randbereich des Langlochs 16 mit der Durchgangsbohrung 36 kongruiert, während in der maximal eingefahrenen Stellung bzw. niedrigsten Montageposition (rechtes Sockelelement 10) der linke Randbereich des Langlochs 16 mit der Durchgangsbohrung 36 kongruiert. Bei gesetzter Schraube, bildet folglich das Langloch 16 seine konstruktive Auslegung einen Anschlag für die beiden Extrempositionen des Verstellmechanismus 30 aus. Zudem ist in Fig. 5 gut erkennbar, wie die Sockelelemente 10 innerhalb des hohlen Grundkörpers 20 aufgenommen sind.

Abweichend von dem dargestellten bevorzugten Ausführungsbeispiel sind auch andere Ausführungsformen denkbar. So kann beispielsweise nur ein einziges Sockelelement an einer der Grundkörper-Seitenflanken 24 vorgesehen sein. Eine solche Ausführungsform erlaubt den Ausgleich von Gefällen, aber keine Parallelverschiebung in vertikale Richtung.

### Bezugszeichen

- 1: Schaltvorrichtung / Schaltfahne;
- 2: Fahrzeugbehandlungsanlage;
- 4: Waschportal;
- 6: Fahrzeug;
- 8: Schienensystem;
- 10: Sockelelement;
- 12: Sockel-Unterseite;
- 14: Sockel-Seitenflanke;
- 16: Langloch;
- 18: (unterer) Verzahnungsabschnitt;
- 20: Grundkörper;
- 22: Grundkörper-Unterseite;
- 24: Grundkörper-Seitenflanke;
- 26: Führungsfläche/ -schräge;
- 28: Aussparung;
- 30: Verstellmechanismus;
- 32: Rast- bzw. Stufensystem;
- 34: oberer Verzahnungsabschnitt;
- 36: Durchgangsbohrung;
- 38: Verzahnungskörper;
- 40: Zapfen;
- 42: Passungsloch.

## Patentansprüche

1. Schaltvorrichtung (1), insbesondere Schaltfahne zur Endlagenerkennung in einer Fahrzeugbehandlungsanlage (2), die dazu vorbereitet ist, mit ihrer Unterseite an einem Hallenboden montiert zu werden,
**gekennzeichnet durch**
zumindest ein keilartiges Sockelelement (10) und einen Grundkörper (20), der mittels einer Verstellmechanik (30) in verschiedenen Höhenpositionen auf dem Sockelelement (10) lagerbar ist, wobei
das Sockelelement (10) dazu ausgebildet ist, mit einer Sockel-Unterseite (12) an einem Hallenboden montiert zu werden und zumindest eine Sockel-Seitenflanke (14) hat, die einen spitzen Winkel, insbesondere einen Winkel kleiner oder gleich 30°, mit der Sockel-Unterseite (12) einschließt und
das Sockelelement (10), der Grundkörper (20) und die Verstellmechanik (30) der Schaltvorrichtung derart ausgebildet und aufeinander abgestimmt sind, dass eine zu der Sockel-Seitenflanke (14) benachbart angeordnete Grundkörper-Seitenflanke (24) unabhängig von der eingestellten Höhenposition des Grundkörpers (20) relativ zum Sockelelement (10) eine zur Sockel-Seitenflanke (14) parallele Ausrichtung beibehält.

2. Schaltvorrichtung (1) gemäß Anspruch 1, **dadurch gekennzeichnet, dass** die Sockel-Seitenflanke (14) und die Grundkörper-Seitenflanke (24) unabhängig von der eingestellten Höhenposition des Grundkörpers (20) relativ zum Sockelelement (10) in einer gemeinsamen Ebene liegen.

3. Schaltvorrichtung (1) gemäß einem der Ansprüche 1 oder 2, **dadurch gekennzeichnet, dass** die Verstellmechanik (30) ein Rast- oder Stufensystem (32) zur stufenweisen Einstellbarkeit der Höhenposition mit komplementären Verzahnungsabschnitten (18, 34) am Sockelelement (10) und am Grundkörper (20) umfasst.

4. Schaltvorrichtung (1) gemäß Anspruch 3, **dadurch gekennzeichnet, dass** die Verzahnungsabschnitte (18, 34) eine relativ zur Sockel-Unterseite (12) schräg angestellte Verzahnung aufweisen.

5. Schaltvorrichtung (1) gemäß einem der Ansprüche 1 bis 4, **dadurch gekennzeichnet, dass** der Grundkörper (20) im Bereich der Grundkörper-Seitenflanke (24) eine Führungsfläche (26) aufweist, die eine Fläche des Sockelelements (10), insbesondere eine Innenfläche der Sockel-Seitenflanke (14), untergreift.

6. Schaltvorrichtung (1) gemäß einem der Ansprüche 1 bis 5, **dadurch gekennzeichnet, dass** die Sockel-Seitenflanke (14) Feder-Nut-artig in einer zentralen Aussparung (28) in der Grundkörper-Seitenflanke (24) laufend angeordnet ist.

7. Schaltvorrichtung (1) gemäß einem der Ansprüche 1 bis 6, **dadurch gekennzeichnet, dass** der Grundkörper (20) an seiner Oberseite zumindest eine Durchgangsbohrung (36) aufweist und das Sockelelement (10) zumindest ein korrespondierendes Langloch (16) aufweist, sodass die Schaltvorrichtung (1) mithilfe eines durch die Durchgangsbohrung (36) und das Langloch (16) hindurchgeführten Befestigungsmittels in verschiedenen Höhenpositionen des Grundkörpers (20) am Boden fixierbar ist.

8. Schaltvorrichtung (1) gemäß einem der Ansprüche 1 bis 7, **dadurch gekennzeichnet, dass** der Grundkörper (20) an zwei gegenüberliegenden Seiten abfallende Grundkörper-Seitenflanken (24) aufweist an denen jeweils ein Sockelelement (10) angeordnet ist.

9. Schaltvorrichtung (1) gemäß Anspruch 8, **dadurch gekennzeichnet, dass** der Grundkörper in einer Seitenansicht betrachtet einen Umriss in Form eines gleichschenkligen Trapezes hat.

10. Fahrzeugbehandlungsanlage (2) mit einer Schaltvorrichtung (1) gemäß einem der Ansprüche 1 bis 9.

## Claims

1. A switching device (1), in particular switching flag for end position detection in a vehicle treatment system (2), which is prepared to be mounted to a hall floor with its underside,
**characterized by**
at least one wedge-like foot element (10) and a base body (20) which is mountable in different height positions on the foot element (10) via an adjustment mechanism (30), wherein
the foot element (10) is configured to be mounted on a hall floor with a foot bottom side (12) and has at least one foot side flank (14) which encloses an acute angle, in particular an angle smaller than or equal to 30°, with the foot bottom side (12), and
the foot element (10), the base body (20), and the adjustment mechanism (30) of the switching device are configured and matched to each other such that a base-body side flank (24) arranged adjacent to the foot side flank (14) maintains an alignment parallel to the foot side flank (14) irrespective of the adjusted height position of the base body (20) relative to the foot element (10).

2. The switching device (1) according to claim 1, **characterized in that** the foot side flank (14) and the base-body side flank (24) lie in a common plane regardless of the adjusted height position of the base body (20) relative to the foot element (10).

3. The switching device (1) according to one of claims 1 or 2, **characterized in that** the adjustment mechanism (30) comprises a detent system or step system (32) for stepwise adjustability of the height position with complementary teeth portions (18, 34) on the foot element (10) and on the base body (20).

4. The switching device (1) according to claim 3, **characterized in that** the teeth portions (18, 34) have teeth that are oblique relative to the foot bottom side (12).

5. The switching device (1) according to one of claims 1 to 4, **characterized in that** the base body (20) has a guide surface (26) in the region of the base-body side flank (24), wherein this guide surface (26) engages under a surface of the foot element (10), in particular an inner surface of the foot side flank (14).

6. The switching device (1) according to one of claims 1 to 5, **characterized in that** the foot side flank (14) is arranged to run in a spring-groove-like manner in a central recess (28) in the base-body side flank (24).

7. The switching device (1) according to one of claims 1 to 6, **characterized in that** the base body (20) has at least one through-hole (36) on its upper side and the foot element (10) has at least one corresponding elongated hole (16), so that the switching device (1) is fixable to the floor in various height positions of the base body (20) with the aid of a fastening means passed through the through-hole (36) and the elongated hole (16).

8. The switching device (1) according to one of claims 1 to 7, **characterized in that** the base body (20) has sloping base-body side flanks (24) on two opposite sides, on each of which a foot element (10) is arranged.

9. The switching device (1) according to claim 8, **characterized in that** the base body has an outline in the form of an isosceles trapezoid when viewed in a side view.

10. The vehicle treatment system (2) comprising a switching device (1) according to one of claims 1 to 9.

## Revendications

1. Dispositif de commutation (1), en particulier plaque de commutation pour une détection de position finale dans une installation de traitement de véhicule (2), qui est préparé pour être monté avec sa face inférieure sur un sol d'atelier,
**caractérisé par**
au moins un élément de socle (10) en forme de cale et un corps de base (20) qui peut être monté sur l'élément de socle (10) dans différentes positions de hauteur au moyen d'un mécanisme de réglage (30), dans lequel
l'élément de socle (10) est conçu pour être monté avec une face inférieure de socle (12) sur un sol d'atelier et présente au moins un flanc côté socle (14) qui délimite un angle aigu, en particulier un angle inférieur ou égal à 30°, avec la face inférieure de socle (12) et
l'élément de socle (10), le corps de base (20) et le mécanisme de réglage (30) du dispositif de commutation sont conçus et adaptés les uns aux autres de telle sorte qu'un flanc côté corps de base (24) agencé adjacent au flanc côté socle (14) conserve une orientation parallèle au flanc côté socle (14), indépendamment de la position de hauteur réglée du corps de base (20) par rapport à l'élément de socle (10).

2. Dispositif de commutation (1) selon la revendication 1, **caractérisé en ce que** le flanc côté socle (14) et le flanc côté corps de base (24) se trouvent dans un plan commun indépendamment de la position de hauteur réglée du corps de base (20) par rapport à l'élément de socle (10).

3. Dispositif de commutation (1) selon l'une des revendications 1 ou 2, **caractérisé en ce que** le mécanisme de réglage (30) comprend un système d'encliquetage ou de niveaux (32) pour un réglage par niveaux de la position de hauteur avec des sections de denture complémentaires (18, 34) sur l'élément de socle (10) et sur le corps de base (20).

4. Dispositif de commutation (1) selon la revendication 3, **caractérisé en ce que** les sections de denture (18, 34) présentent une denture agencée en oblique par rapport à la face inférieure de socle (12).

5. Dispositif de commutation (1) selon l'une quelconque des revendications 1 à 4, **caractérisé en ce que** le corps de base (20) présente, dans la zone du flanc côté corps de base (24), une surface de guidage (26) qui vient en prise par en-dessous avec une surface de l'élément de socle (10), en particulier une surface intérieure du flanc côté socle (14).

6. Dispositif de commutation (1) selon l'une quelconque des revendications 1 à 5, **caractérisé en ce que** le flanc côté socle (14) est agencé de manière continue à la manière d'une languette et d'une rainure dans un évidement central (28) dans le flanc côté corps de base (24).

7. Dispositif de commutation (1) selon l'une quelconque des revendications 1 à 6, **caractérisé en ce que** le corps de base (20) présente au moins un trou traversant (36) sur sa face supérieure, et l'élément de socle (10) présente au moins un trou oblong (16) correspondant, de sorte que le dispositif de commutation (1) peut être fixé sur le sol dans différentes positions de hauteur du corps de base (20) au moyen d'un moyen de fixation qui est passé à travers le trou traversant (36) et le trou oblong (16).

8. Dispositif de commutation (1) selon l'une des revendications 1 à 7, **caractérisé en ce que** le corps de base (20) présente des flancs côté corps de base (24) en pente sur deux côtés opposés, sur chacun desquels un élément de socle (10) est agencé.

9. Dispositif de commutation (1) selon la revendication 8, **caractérisé en ce que** le corps de base, vu de côté, présente un contour en forme de trapèze isocèle.

10. Installation de traitement de véhicule (2) avec un dispositif de commutation (1) selon l'une des revendications 1 à 9.
